# EUROPEAN PATENT APPLICATION

(11) **EP 3 187 963 A1**
(43) Date of publication of application: **05.07.2017**
(21) Application number: 16207187.2
(22) Date of filing: 28.12.2016
(51) Int. Cl.: G06F 1/16

(54) **DISPLAY DEVICE AND METHOD**

(30) Priority: 31.12.2015 CN 201511031314; 28.04.2016 US 201615140659
(71) Applicant: Shanghai Xiaoyi Technology Co., Ltd., Pudong New Area Shanghai 201203 (CN)
(72) Inventor: LIU, Yi, Free Trade Zone, Pudong New Area, Shanghai 201203 (CN)
(74) Representative: Finnegan Europe LLP

(57) **Abstract**

A display device and method are disclosed. According to certain embodiments, a display device (130, 330) includes a display component (260, 360) configured to display a virtual image (140). The device also includes a processor (250, 350) in communication with a terminal (110). The processor is configured to obtain image data from the terminal; and control the display component to generate the virtual image based on the image data.

## Description

### CROSS-REFERENCE TO RELATED APPLICATIONS

This application is based upon and claims priority to Chinese Patent Application No. 201511031314.9, filed December 31, 2015, and United States Patent Application No. 15/140,659, filed April 28, 2016, the entire contents of which are incorporated herein by reference.

### TECHNICAL FIELD

The present disclosure relates generally to the field of display technologies, and more particularly, to a device and method for generating a virtual display.

### BACKGROUND

Display technologies aim to provide ever richer visual information for users. For example, TVs, mobile phone screens, and computer monitors have been developed with increasingly bigger sizes and higher resolutions. However, these improvements often come with the cost of higher power consumption, lost portability, and/or compromised information privacy.

As to the power consumption, most of the energy consumed by a display panel is dissipated in the space, while only a small portion of the light emitted by the display panel is received by an individual user's eyes. For example, the powers consumed by a 19-inch liquid crystal display (LCD) monitor and a LCD screen used on a mobile phone are typically 20W and 1-2W, respectively. In contrast, the light power that actually arrives at a user's eyes is only about tens of mW.

The demand for portability has been in constant conflict with the pursuit of bigger screens. For example, a bigger screen of a mobile phone may carry out more tasks and deliver a better visual experience. However, the size of a mobile phone cannot be increased indefinitely without impairing the phone's portability. 7-8 inches are probably the limit for the screen on a mobile phone. Moreover, sophisticated electronic devices often provide some sort of human-machine interfaces for a user to control the content displayed by such devices. The physical locations of these human-machine interfaces are often fixed or confined within a small area. For example, a user must sit in front of a computer monitor in order to use an accompanied keyboard or mouse. Also for example, a remote control for a TV can only work within certain distance from the TV. Therefore, the user may have to stay in specified positions to view the displayed information.

The popularity of portable display devices also presents the challenge of maintaining the privacy of the displayed information. For example, in public places, such as coffee shops and airports, more and more people like to use their mobile phones and laptop computer for work or entertainment. Since the screens of the mobile phones and laptop computers must be kept in a distance from the users' eyes, the displayed information may easily be captured by a surveillance camera or a stranger. Thus may cause leakage of personal and/or sensitive information.

The disclosed method and system address one or more of the problems discussed above.

### SUMMARY

In accordance with a first aspect of the invention, a display device is provided. The display device includes a display component configured to display a virtual image. The display device also includes a processor in communication with a terminal. The processor is configured to obtain image data from the terminal; and control the display component to generate the virtual image based on the image data.

In accordance with a further aspect of the invention, a display method is provided. The method includes obtaining image data from a terminal. The method also includes displaying the image data on a display panel. The method further includes generating a virtual image of the display panel.

The display panel may be a portable device. The display panel and the virtual image of the display panel have different sizes. Obtaining the image data from the terminal may comprise, if the image data is encrypted, decrypting the image data. Alternatively or additionally, obtaining the image data from the terminal may comprise, if the image data is compressed, decompressing the image data. The image data may comprise operation parameters of the terminal. The display method may comprise overlaying the virtual image on an actual environment surrounding the display device. The display method may further comprise adjusting a quality of the virtual image based on the actual environment. The quality of the virtual image may comprise at least one of brightness or contrast ratio of the virtual image.

In accordance with a further aspect of the invention, a processor-readable medium is provided. The processor-readable medium comprises instructions which, when executed by a processor, cause the processor to perform the display method disclosed herein.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a schematic diagram illustrating a display system, according to an exemplary embodiment.
Fig. 2 is a schematic diagram illustrating a display device used in the display system illustrated in Fig. 1, according to an exemplary embodiment.
Fig. 3 is a block diagram of an exemplary display device, consistent with the display device illustrated in Fig. 2.
Fig. 4 is a schematic diagram illustrating an exemplary implementation of an augmented reality module in the display device shown in Fig. 3.
Fig. 5 is a flowchart of a display method performed by the display device shown in Fig. 3, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects related to the invention as recited in the appended claims.

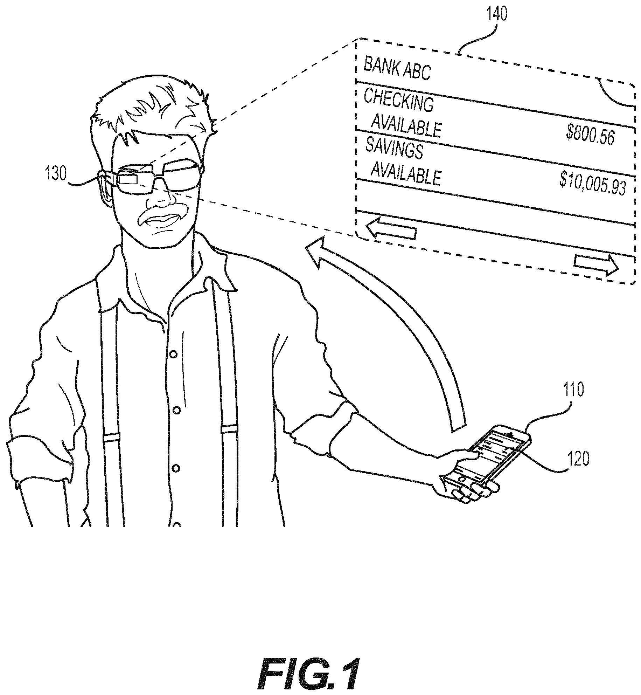

Fig. 1 is a schematic diagram illustrating a display system 100, according to an exemplary embodiment. Referring to Fig. 1, system 100 may include a terminal 110 and a display device 130.

Terminal 110 may be an electronic device capable of obtaining, storing, processing, and/or displaying image data. Although Fig. 1 shows terminal 100 as a hand-held device, terminal 100 may be any portable or fixed device. For example, terminal 110 may be a smart phone, a smart TV, a tablet computer, a personal computer, a wearable device (for example, a smart bracelet), a video game console, a personal digital assistant (PDA), a medical device, exercise equipment, an ebook reader, etc.

The image data may be any data capable of being displayed as an image viewable by a user. Terminal 110 may obtain the image data using any method known in the art. In one embodiment, terminal 110 may be configured to independently generate the image data. For example, terminal 110 may include a camera configured to shoot photos and/or videos. Also for example, terminal 110 may generate operation parameters indicative of the system configurations and operation statuses of terminal 110. These operation parameters may be displayed to the user and facilitate the user's monitoring and operation of terminal 110. In another embodiment, terminal 110 may receive the image data from another device. For example, terminal 110 may be connected to a network and download the image data from another device, such as a server or another terminal. Also for example, terminal 110 may be connected to an external memory or storage device, such as a flash memory, and access image data stored in the external memory or storage device.

In some exemplary embodiments, terminal 110 may include a display panel 120 configured to output pictures, videos, and/or other types of visual information based on the image data. For example, display panel 120 may be used to display photos, movies, television shows, webpages, and/or presentations. Display panel 120 may be an LCD, a light-emitting diode (LED) display, a plasma display, or any other type of display.

Display panel 120 may also be implemented as a touch screen to receive input signals from the user. The touch screen may include one or more touch sensors to sense touches, swipes, and gestures on the touch screen. The touch sensors may not only sense a boundary of a touch or swipe action, but also sense a period of time and a pressure associated with the touch or swipe action. The user may use the touch screen to enter various commands to be implemented by system 100. For example, the user may select a picture or video currently displayed on display panel 120 and send it to display device 130, so that display device 130 may display the same picture or video simultaneously.

Despite the above description and the illustration in Fig. 1, in some embodiments, terminal 100 has no display or only has limited display capabilities, and thus may have to rely on other devices, such as display device 130, to display the image data. For example, terminal 100 may be a smart bracelet without a display screen. The smart bracelet may be configured to form a binding relationship with display device 130 and send the image data to display device 130 for displaying.

Display device 130 may be a device configured to receive the image data from terminal 100 and generate, based on the image data, a virtual display 140 in the user's field of view. For example, display device 130 may be a wearable display (for example, a head-mounted display), a portable projector, a portable display panel, etc. For illustration purpose only, Fig. 1 shows and the following description refers to display device 130 as a pair of smart glasses. However, it is contemplated that the technical solution provided by the present disclosure may be applied to any wearable or non-wearable display devices.

Virtual display 140 may be a virtual image formed in the user's field of view. Such virtual image does not need to be projected or displayed on a screen, and thus carries several advantageous features. First, the size of virtual display 140 is not limited by the size of a screen. As described below, display device 130 may adjust the size of virtual display 140 as needed. For example, virtual display 140 may have a bigger size than display panel 120. Moreover, the location of virtual display 140 is not limited by the location of a screen. Virtual display 140 not only can move together with the user's field of view, but also can be formed anywhere in the environment surround display device 130. Further, without being displayed on a screen, only the user of display device 130 may view virtual display 130. Therefore, the privacy of the visual content shown by virtual display 130 may be secured.

In exemplary embodiments, by displaying the image data received from terminal 110 on virtual display 140, display device 130 may serve to enlarge and expand display panel 120. Referring to Fig. 1, display panel 120 may be used to display the image data. However, display panel 120 may have several limitations that impair viewing experience of the user. Specifically, the size of display panel 120 may be kept small for practical reasons. For example, terminal 110 may be a portable device, such as a mobile phone or laptop computer, that must impose certain limit to the size of display panel 120. Moreover, the user may be required to view display panel 120 in limited locations and manners. For example, display panel 120, used as a computer monitor or a smart TV, may only be viewed by a user within a specified range of distance and/or viewing angle. For another example, if terminal 110 is a mobile phone, the user normally needs to hand-hold terminal 110 while viewing display panel 120.

Virtual display 140 may be used to solve one or more limitations associated with display panel 120. With continued reference to Fig. 1, virtual display 140 may have a display area larger than display panel 120. Therefore, virtual display 140 may offer the user a big-screen experience without physically enlarge the size of display panel 120. Also, display device 130 may form virtual display 140 in a location different from display panel 120. Therefore, virtual display 140 may effectively expand the display range of display panel 120 without physically moving/extending display panel 120 or using other screens. In particular, display device 130 may be implemented as a wearable device and directly form virtual display 140 in the user's field of view. This way, virtual display 140 may move together with the field of view and uninterruptedly present the image data to the user even when the user is moving.

In some exemplary embodiments, display device 130 may also overlay virtual display 140 on the actual environment surrounding display device 130, so as to provide a sense of augmented reality. This way, the user may simultaneously view virtue display 140 and at least part of the surrounding environment, without refocusing the eyes. Therefore, display device 130 may enrich the visual information seen by the user.

In some exemplary embodiments, display device 130 may be configured to make virtual display 140 only viewable by the user of display device 130. This is because virtual display 140 does not need to be formed on a screen and can only be viewed with the aid of display device 130. For example, display device may be implemented as a wearable device, such as a pair of smart glasses. As illustrated in Fig. 1, the user may use terminal 110 to access a bank account. However, the banking information displayed on display panel 120 may be seen by a nearby stranger. To protect information privacy, the user may instead use display device 130 to display the banking information on virtual display 140. Since people not wearing the particular display device 130 cannot see virtual display 140, the information privacy is preserved.

In some exemplary embodiments, display device 130 may also be configured to display operation statuses or parameters of terminal 110 on virtual display 140, to facilitate the user's usage or testing of terminal 110. For example, terminal 110 may be a smart camera with limited display capabilities. During installation or calibration of the smart camera, display device 130 may obtain the smart camera's operation parameters and display them on virtual display 140.

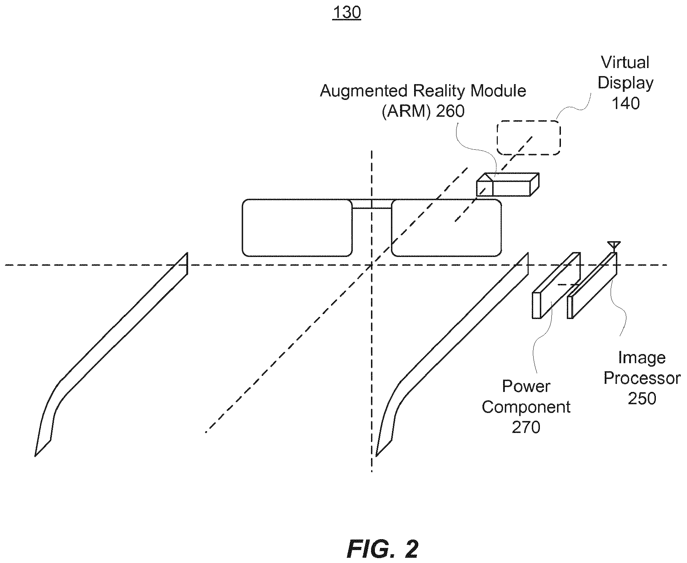

Fig. 2 is a schematic diagram illustrating a display device 130, according to an exemplary embodiment. For example, virtual display device 130 may be used in system 100 to generate a virtual display 140 (Fig. 1). Referring to Fig. 2, display device 130 may include an image processor 250, an augmented reality module (ARM) 260, and a power component 270.

In the example illustrated in Fig. 2, display device 130 may be implemented as a pair of smart glasses wearable by a user. Display device 130 may include a frame on which image processor 250, ARM 260, power component 270 may be mounted. Image processor 250 and power component 270 may be attached, for example, to a temple or brow bar of the frame, so as not to block the user's visual field. In contrast, ARM 260 may be attached to an eyewire of the frame so as to form virtual display 140 in the user's field of view. Image processor 250 is communicatively connected to ARM 260 to facilitate signal transmission. Power component 270 is electrically connected to both image processor 250 and ARM 260, and provides power to the same.

Image processor 250 may include high-speed integrated circuitry configured to receive, process, and display image data. Image processor 250 may establish wireless or wired communication with terminal 110 and receive image data from terminal 110. In some embodiments, the image data may be compressed and/or encrypted by terminal 110. Accordingly, image processor 250 is configured to decompress and/or decrypt the received image data. In some embodiments, terminal 110 may transmit the image data in multiple data packets. Accordingly, image processor 250 is further configured to combine the received data packets into complete image data. In some embodiments, image processor 250 is also configured to optimize the image data to improve the image quality using any method known in the art.

ARM 260 may include a micro-display and an associated optical assembly that are integrated in a small-sized box. The micro-display is placed in front of the user's eye. Image processor 250 may generate voltage and/or current signals based on the image data, and use these signals to drive the micro-display to display corresponding images. The optical assembly may include one or more optical devices configured to generate a magnified virtual image of the image shown on the micro-display. Such virtual image, i.e., virtual display 140, can be viewed by the user. Virtual display 140 is overlaid on the physical, real-world environment to create an augmented reality. In some embodiments, display device 130 may include only one ARM 260 placed in front of one eye of the user for monocular viewing. In some embodiments, display device 130 may include multiple ARMs 260, with at least one ARM 260 being placed in front of each eye for binocular viewing.

Power component 270 may include one or more power sources, such as lithium-ion batteries. In some embodiments, power component 270 may also include a power management system and any other components associated with the generation, management, and distribution of power in display device 130.

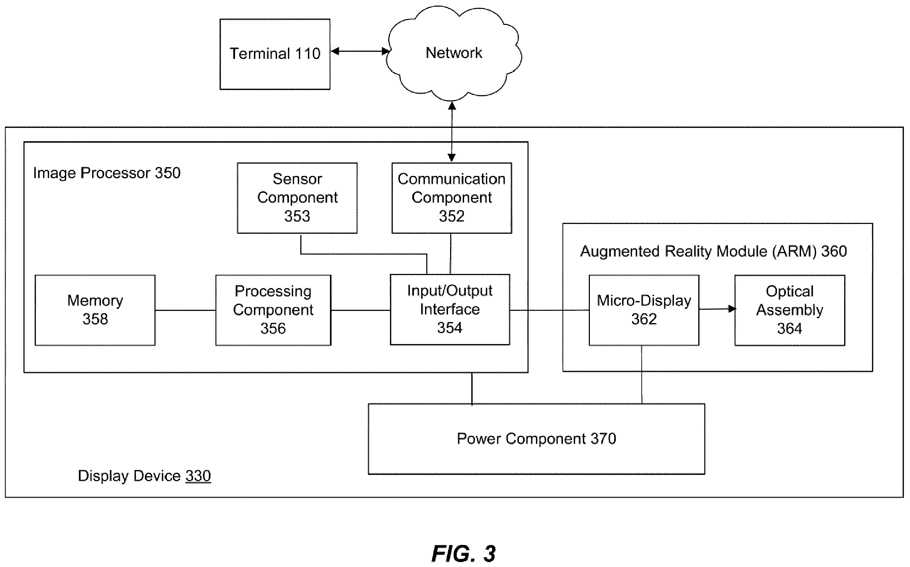

Fig. 3 is a block diagram of an exemplary display device 330, consistent with display device 130 illustrated in Figs, 1 and 2. For example, display device 330 may be used in system 100 illustrated in Fig. 1. Referring to Fig. 3, display device 330 may include an image processor 350, an ARM 360, and a power component 370, consistent with image processor 250, ARM 260, and power component 270, respectively.

Image processor 350 may include a communication component 352, a sensor component 353, an input/output (I/O) interface 354, a processing component 356, and a memory 358. One or more of the components of image processor 350 may be implemented as one or more application-specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing functions consistent with image processor 350. These components may be configured to transfer data and send or receive instructions between or among each other.

Communication component 352 may be configured to facilitate communication, wired or wirelessly, between the display device 330 and other devices, such as terminal 110. Display device 330 may access a wireless network based on one or more communication standard, such as Wi-Fi, LTE, 2G, 3G, 4G, 5G, etc. In one exemplary embodiment, communication component 352 may receive a broadcast signal or broadcast associated information from an external broadcast management system via a broadcast channel. In one exemplary embodiment, communication component 352 may further be configured to implement short-range communications based on a near field communication (NFC) technology, a radio frequency identification (RFID) technology, an infrared data association (IrDA) technology, an ultra-wideband (UWB) technology, a Bluetooth (BT) technology, or other technologies. For example, communication component 352 may receive image data from terminal 110 through a local Bluetooth or Wi-Fi network.

Sensor component 353 may include one or more sensors to provide status assessments of various aspects of display device 330, the user's field of view, and/or the user's eye movement. For instance, sensor component 353 may detect an on/off status of display device 130, a change in position of display device 130, a presence or absence of user contact with display device 130, an orientation or an acceleration/deceleration of display device 130, a change in temperature of display device 130, a head orientation of the user, gaze attributes of the user, various aspects (for example, brightness) of the environment surrounding display device 130, etc. In some embodiments, Sensor component 353 may include one or more barometric sensors, proximity sensors, physiological monitoring sensors, magnetometers, gyroscopes, accelerometers, motion detectors, image sensors, depth sensors, eye tracking sensors, cameras, light sensors, etc.

For example, sensor component 353 may include one or more eye-tracking sensors. The eye-tracking sensor may be configured to determine the direction of the gaze or other gaze attributes of the user using various techniques. The eye-tracking sensor may emit a pupil-illuminating light beam directed at the pupil of an eye of the user. Another reference light beam may also be directed at the face and/or head of the user. The eye-tracking sensor may include an image detector, such as a charge coupled devices (CCD), configured to receive reflected portions of the pupil-illuminating light beam and the reference light beam. By comparing the reflected portions of the light beams, processing component 356 may determine a line of sight of the user.

I/O interface 354 includes one or more digital and/or analog communication devices that allow processing component 356 to communicate with other components of display device 330. I/O interface 354 may be configured to consolidate signals it received from communication component 352 and sensor component 353 and relay the data to processing component 356. For example, I/O interface 354 may send the image data, sent by terminal 110, to processing component 356 for further processing. I/O interface 354 may also receive display signals from processing component 356, and send the display signals to ARM 360 for generating virtual display 140.

Processing component 356 may include any appropriate type of general purpose or special-purpose microprocessor, digital signal processor, central processing unit, circuitry, etc. Processing component 356 may be configured to receive and process the image data. In some embodiments, to ensure data security, terminal 110 may encrypt the image data using any method known in the art. Accordingly, processing component 356 may be configured to decrypt the received image data using a method consistent with the encryption method employed by terminal 120. In some embodiments, to improve data transmission speed, terminal 110 may also compress the image data using any method known in the art. Accordingly, processing component 356 may be configured to decompress the received image data using a method consistent with the compression method. In some embodiments, terminal 110 may further divide the image data into multiple data packets and transmit the data packets to display device 130, according to a predetermined communication protocol. Accordingly, processing component 356 may be configured to combine the received data packets into complete image data, following the same communication protocol.

Processing component 356 may be configured to generate, based on the image data, control signals used for controlling ARM 360 to produce virtual display 140. In some exemplary embodiments, processing component 356 may perform various methods to optimize the image qualities, such as sharpness, color accuracy, brightness, or contrast ratio, of the virtual display 140. For example, processing component 356 may optimize the brightness and contrast ratio of virtual display 140 based on one or more conditions, such as brightness, of the surrounding environment sensed by sensor component 353, so as to improve the user experience of the augmented reality. Particularly, when conditions of the surrounding environment is changing, such as changing from indoor to outdoor, processing component 356 may adjust brightness and contrast ratio of virtual display 140 accordingly.

Processing component 356 may also be configured to optimize the position of virtual display 140 in the user's view of field. Based on the sensed surround environment, processing component 356 may render virtual display 140 in a position that does not impede viewing of real objects in the environment. Moreover, processing component 356 may track the changes of the user's head orientation, gaze direction, and/or surrounding environment, and constantly reposition the virtual display 140.

Memory 358 may be any type of computer-readable medium, such as flash memory, random access memory, or firmware, configured to store data and/or instructions to support the operation of the display device 130. For example, memory 358 may store the image data received from terminal 110. Memory 358 may also store instructions used by the processing component 358 to decompress, decrypt, and/or combine the image data. Memory 358 may further store instructions used by processing component 358 to control ARM 360 and to optimize the image quality of virtual display 140.

Still referring to Fig. 3, ARM 360 may include a micro-display 362 and an optical assembly 364. Micro-display 362 may be implemented using any technology known in the art, including, but not limited to, modulating micro-displays and emissive micro-displays. Modulating micro-displays, such as liquid crystal on silicon (LCoS), are blanket-illuminated by one or more separate light sources and modulate incident light on a pixel-by-pixel bases. In contrast, emissive micro-displays generate and emit light from the surface of the micro-displays on a pixel-by-pixel basis. The emissive micro-display may be an organic emissive micro-display, such as an organic light emitting diodes (OLED) or organic light emitting Polymers (OLEP) micro-displays. Taking OLED micro-displays as an example, OLED materials are deposited on a flat silicon backplane. Pixel circuitry may be used to convert the control signals sent by processing component 356 into current signals, which are supplied to the OLED materials via metal electrodes. In exemplary embodiments, micro-display 362 may be configured to have a size less than 0.5 inch, suitable for being installed on a wearable device. Micro-display 362 may display images in standard or high definitions. Optical assembly 364 may be used to magnify micro-display 362 so that the displayed images can be viewed by the user.

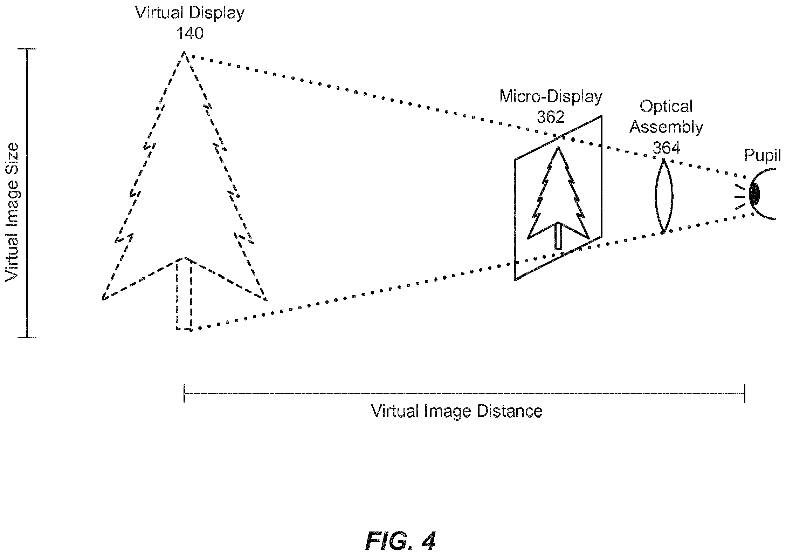

Optical assembly 364 may include any types of optical devices configured to form a magnified virtual image of micro-display 362. For example, optical assembly 364 may include a prism and a concave mirror. Also for example, optical assembly 364 may include one or more lens or lens arrays. Fig. 4 is a schematic diagram illustrating an exemplary implementation of ARM 360. Referring to Fig. 4, optical assembly 364, placed between micro-display 362 and the user's pupil, acts as a magnifier to produce a enlarged, virtual, and erect image of micro-display 362, i.e., virtual display 140. For example, the display area of virtual display 140 may be 100-200 times bigger than micro-display 362. With various optical designs, optical assembly 364 may be configured to form virtual display 140 at a desirable distance from the pupil and with a desirable image size, such as 4 meters and 50 inches, respectively. In this manner, display device 130 may create a visual experience of watching a big-screen TV.

In some embodiments, optical assembly 364 may also include one or more actuators configured to move the optical devices. By changing the orientations or positions of the optical devices, optical assembly 364 may adjust the distance between virtual display 140 and the pupil or the brightness of virtual display 140. This way, virtual display 140 may be properly overlaid on the surrounding environment to provide improved experience of augmented reality.

With continued reference to Fig. 3, power component 370 is similar to power component 270 (Fig. 2) and configured to supply power to image processor 350 and ARM 360. Because of its small size, micro-display 362 may only have a typical power consumption of 0.1-0.2W, which is 10-100 times lower than conventional LCDs used on a mobile phone or a TV However, with the aid of optical assembly 364, micro-display 362 may create virtual display 140 with a brightness and size similar to the conventional LCDs. Therefore, the display device 330 can reduce the power consumption while maintaining the quality of visual experience. Power component 370 may be made smaller and lighter, which is desirable for wearable devices.

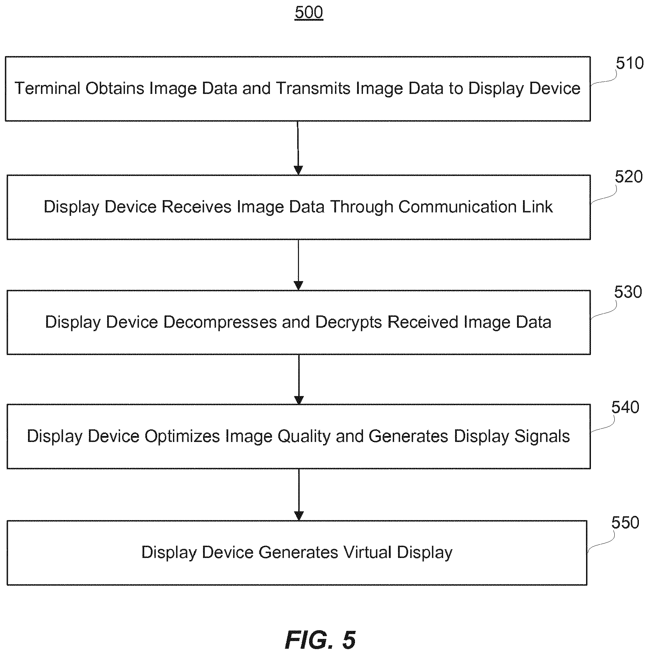

Fig. 5 is a flowchart of a display method 500, according to an exemplary embodiment. For example, method 500 may be used in display device 330 (Fig. 3). In particular, display device 330 may be used in combination with terminal 110 and to generate virtual display 140 based on image data received from terminal 110. Referring to Fig. 5, method 500 may include the following steps 510-550.

In step 510, terminal 110 may obtain the image data and transmit the image data to display device 330. Terminal 110 may be installed with an application for using display device 330. A binding relationship may be initially set up between terminal 110 and display device 330. When the user starts the application, terminal 110 may automatically search for display device 330 and form a communication link with display device 330. Terminal 110 may collect the image data in various manners. Terminal 110 may retrieve the image data from a local storage device. Terminal 110 may also download the image from another device. Terminal 110 may further produce the image data by itself. In some exemplary embodiments, terminal 110 may include a camera that can record the image data. In some exemplary embodiments, to enable the user to monitor and operate terminal 110, terminal 110 may also collect its operation parameters and covert the operation parameters into the image data. After obtaining the image data, terminal 110 may compress and/or encrypt the image data, for purpose of improving the data transmission speed and data security. Terminal 110 may also divide the image data into multiple data packets according to certain communication protocols. Terminal 110 may then stream the compressed and/or encrypted data packets to display device 130.

In step 520, display device 330 may receive the image data through the communication link. The communication link may be wired or wireless and may be selected based on the type of terminal 110 and the volume of the image data. For example, when terminal 110 is also a portable device and the image data has a large volume, receiving the image data through a cable ensures fast and stable data transmission, but does not impair the user's mobility. For another example, displace device 330 may receive the image data through a wireless network. For a short distance, displace device 330 may receive the image data via a Bluetooth connection. For a longer distance and large volume of image data, display device 330 may receive the image data through a Wi-Fi network.

In step 530, display device 330 may decompress and decrypt the received image data. Image processor 350 may decompress and decrypt the received image data using methods consistent with the compression and encryption methods employed by terminal 110. Image processor 350 may also combine the multiple data packets into complete image data for further processing.

In step 540, display device 330 may optimize the image quality and generate display signals. Based on the image data, image processor 360 may optimize the image quality, such as image brightness and contrast ratio, to improve the effect of augmented reality. Image processor 360 may then generate display signals based on the optimized image data and send these display signals to ARM 360.

In step 550, display device 330 may generate virtual display 140. Micro-display 362, controlled by the display signals, may display the image data. Optical assembly 364 may then form a magnified virtual image of micro-display 362, i.e., virtual display 140. Micro-display 362 and optical assembly 364 may be configured to generate virtual display 140 at a desired distance from the user's eyes and in a desired size, so as to create a big-screen visual experience for the user.

The disclosed display device may provide several benefits. First, the display device may generate a magnified and mobile virtual display to enlarge the display area and expand the display range of existing display hardware. Moreover, the display device may overlay the virtual display on the surrounding environment to create an augmented reality. Furthermore, by using the micro-display, the display device may produce big-screen visual experience with reduced power consumption. In addition, the display device may be configured to make the virtual display only viewable by the user of the display device, and therefore protect the privacy of the displayed information.

Other embodiments of the present disclosure will be apparent to those skilled in the art from consideration of the specification and practice of the present disclosure. This application is intended to cover any variations, uses, or adaptations of the present disclosure following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact constructions that are described above and illustrated in the accompanying drawings, and that various modifications and changes can be made without departing from the scope thereof. It is intended that the scope of the invention should only be limited by the appended claims.

## Claims

1. A display device, comprising:
a display component configured to display a virtual image; and
a processor configured to communicate with a terminal, the processor being configured to:
obtain image data from the terminal; and
control the display component to generate the virtual image based on the image data.

2. The display device of claim 1, wherein the display device is a portable device.

3. The display device of claim 1 or claim 2, wherein the display component comprises:
a display panel configured to display the image data; and
an optical assembly configured to generate a virtual image of the display panel.

4. The display device of claim 3, wherein the display panel is an organic light-emitting diode display.

5. The display device of claim 3 or claim 4, wherein the display panel and the virtual image of the display panel have different sizes.

6. The display device of any of the preceding claims, wherein:
the image data is encrypted; and
wherein the processor is further configured to decrypt the image data.

7. The display device of any of the preceding claims, wherein:
the image data is compressed; and
wherein the processor is further configured to decompress the image data.

8. The display device of any of the preceding claims, wherein the image data comprises operation parameters of the terminal.

9. The display device of any of the preceding claims, wherein the display component is configured to overlay the virtual image on an actual environment surrounding the display device.

10. The display device of claim 9, wherein the processor is further configured to adjust a quality of the virtual image based on the actual environment.

11. The display device of claim 10, wherein the quality of the virtual image comprises at least one of brightness or contrast ratio of the virtual image.

12. A display method, comprising:
obtaining image data from a terminal;
displaying the image data on a display panel; and
generating a virtual image of the display panel.

13. The display method of claim 12, wherein:
the display panel is a portable device; and/or
the display panel and the virtual image of the display panel have different sizes; and/or
obtaining the image data from the terminal comprises if the image data is encrypted, decrypting the image data; and/or
obtaining the image data from the terminal comprises if the image data is compressed, decompressing the image data; and/or
the image data comprises operation parameters of the terminal.

14. The display method of claim 12 or claim 13, further comprising overlaying the virtual image on an actual environment surrounding the display device, and optionally further comprising adjusting a quality of the virtual image based on the actual environment, wherein the quality of the virtual image optionally comprises at least one of brightness or contrast ratio of the virtual image.

15. A processor-readable medium comprising instructions which, when executed by a processor, cause the processor to perform the display method of any of claims 12 to 14.
